(19)

Europäisches
Patentamt
European
Patent Office
Office européen
des brevets

(11) **EP 1 788 799 A2**

(12) **EUROPEAN PATENT APPLICATION**

(43) Date of publication:
**23.05.2007 Bulletin 2007/21**

(51) Int Cl.:
*H04N 5/20* *(2006.01)*

(21) Application number: **06123690.7**

(22) Date of filing: **08.11.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **17.11.2005 KR 20050110168**

(71) Applicant: **Samsung Electronics Co., Ltd.**
**Suwon-si, Gyeonggi-Do (KR)**

(72) Inventor: **JO, Gye-wook,**
**bYucksan Apt.**
**Gyeonggi-do (KR)**

(74) Representative: **Pisani, Diana Jean**
**Venner Shipley LLP**
**20 Little Britain**
**London EC1A 7DH (GB)**

(54) **Image processing apparatus and image processing method**

(57)    An image processing apparatus includes a signal input unit to which an analog image signal is inputted, a first conversion unit for converting the analog image signal into a first digital image signal, a calculating unit for calculating a gray scale mean for an image by analyzing a brightness signal of the first digital image signal , and at least one second conversion unit for converting a portion of the analog image signal into a second digital image signal based on the gray scale mean. A combining unit may be provided for combining the first digital image signal and the second digital image signal based on the gray scale mean. Accordingly, an improved gray scale representation signal can be provided by performing an adaptive process to convert an analog image signal into a digital image, based on gray scales of the analog image signal.

EP 1 788 799 A2

**Description**

The present invention relates to an image processing apparatus. More particularly, the present invention relates to an image processing apparatus and method for converting an analog image signal into a digital image signal.

An image processing apparatus generally includes an image signal processing unit for processing various inputted image signals. In particular, a display device employing an image processing apparatus includes a signal input unit for receiving an external image signal, an image signal processing unit for processing the image signal received through the signal input unit, and a display unit for displaying the image signal outputted from the image signal processing unit as an image. The image signal received from the signal input unit is processed in the image signal processing unit for display on the display unit as an image.

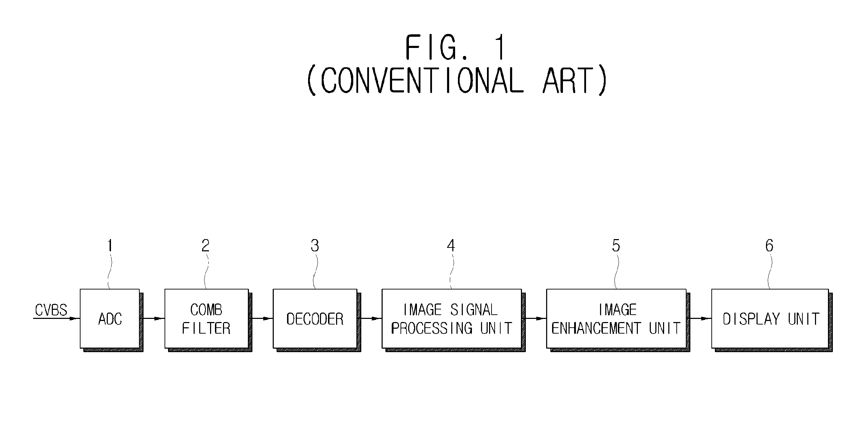

A display device employing a conventional image processing apparatus will now be described with reference to Figure 1. The display device includes an ADC (analog-to-digital converter) 1 for converting an analog image signal inputted through a signal input unit into a digital image signal, a comb filter 2 for separating the digital image signal from the ADC 1 into a brightness signal and a color difference signal, a decoder 3 for decoding the brightness signal and the color difference signal from the comb filter 2, and an image signal processing unit 4 for processing the image signal outputted from the decoder 3 into a displayable format on the display unit 6. Such a display device may further include an image enhancement unit 5 for performing an enhancing process to improve the image quality of an image signal processed in the image signal processing unit 4 before displaying the image signal on the display unit 6.

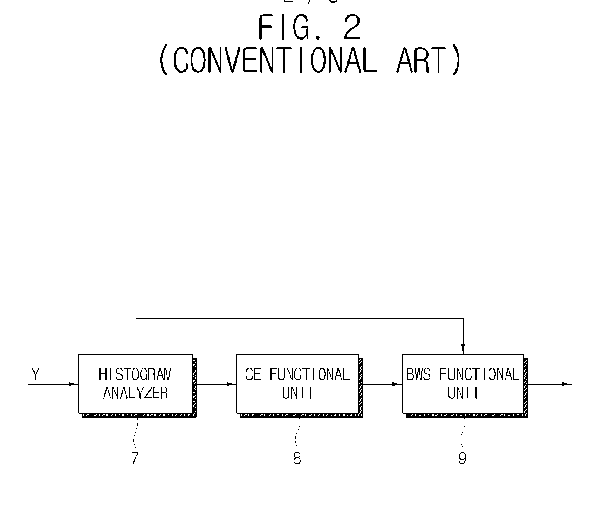

Now, the image enhancement unit 5 will be described in more detail with reference to Figure 2. The image enhancement unit 5 includes a histogram analyzer 7 for analyzing a brightness signal of the image signal in a digital format, which is outputted from the image signal processing unit 4, to calculate the gray scale mean for an image, a CE (contrast enhancer) unit 8 for adjusting contrast of the image signal based on the gray scale mean calculated in the histogram analyzer 7, and a BWS (black & white stretch) unit 9 for adjusting a black component of the image signal based on the gray scale mean calculated in the histogram analyzer 7. The image enhancement unit 5 performs an enhancing process to adjust the contrast and the black component to improve the image quality of the image signal processed in the image signal processing unit 4. This results in the display of a high quality image corresponding to the inputted analog image signal.

As stated above, in the image processing apparatus for receiving the analog image signal and outputting an image corresponding to the received analog image signal, the ADC 1 is essential for converting the analog image signal into the digital image signal. The ADC 1 has a considerable influence on a variety of performance factors, such as noise and gradation representation. For example, in case where an ADC 1 used at an early stage of the processing of an analog image signal has a low performance with 8-bit resolution, deterioration of quality of the image signal cannot be avoided even though the comb filter 2, the decoder 3 and the image signal processing unit 4 are high-performance functional units capable of processing data at greater resolutions. The deterioration of the image quality will be particularly evident when an image signal with low gray scale values is outputted.

In other words, a problem exists in the conventional image processing apparatus in that the limitation of gray scale representation imposed by the performance of the ADC 1 cannot be rectified, even if the functional units provided in the later stages of signal processing have excellent performance.

Accordingly, there is a need for an improved image processing apparatus and method that provides an improved gray scale representation signal.

According to a first aspect of the invention, an image processing apparatus comprises a first conversion unit for converting the analog image signal inputted through the signal input unit into a first digital image signal, a calculating unit for calculating a gray scale mean for an image by analyzing a first brightness signal of the first digital image signal outputted from the first conversion unit and outputting a gray scale mean signal corresponding to the calculated gray scale mean and at least one second conversion unit for converting a portion of the analog image signal into a second digital image signal based on the gray scale mean signal.

The image processing apparatus may comprise a combining unit arranged to combine the first digital image signal and the second digital image signal based on the gray scale mean signal.

The image processing apparatus may include a filtering unit for receiving the first digital image signal outputted from the first conversion unit and the second digital image signal outputted from the second conversion unit and deriving from each of the received first and second digital image signals a brightness signal and a color difference signal.

The calculating unit may be configured to calculate the gray scale mean for the image by analyzing the brightness signal, which corresponds to the first digital image signal, of the brightness signal and the color difference signal in each of the first and second digital image signals outputted from the filtering unit.

The calculating unit may be configured to calculate a total gray scale value by adding up gray scale values for pixels expressing the image, based on the brightness signal of the first digital image signal and calculating dividing the total gray scale value by the number of pixels of the image.

The at least one second conversion unit may be arranged to convert a portion of the analog image signal corresponding to luminances lower than the gray scale mean, into the second digital image signal.

Where provided, the combining unit may include a dithering unit for performing a dithering process for predetermined data in the brightness signal of the second digital image signal, based on the gray scale mean signal, and a mixer for combining a portion of the brightness signal of the first digital image signal corresponding to luminances higher than the gray scale mean with the brightness signal of the second digital image signal outputted from the dithering unit and a predetermined look-up table.

Where the image processing apparatus comprises a filter unit and combining unit,a signal unit and an image enhancement unit may be provided. In this case the signal processing unit may be arranged to process the color difference signal corresponding to the first digital image signal outputted from the filtering unit and the brightness signal outputted from the combining unit into a displayable image signal and the image enhancement unit may be arranged to improve image quality of an image signal outputted from the signal processing unit.

Where provided, the image enhancement unit may be configured to perform a process for improving the image quality of the image signal outputted from the signal processing unit based on the gray scale mean signal outputted from the calculating unit.

For example, the image enhancement unit may comprise a contrast enhancer (CE) unit, for adjusting contrast of the image signal outputted from the signal processing unit based on the gray scale mean signal, and a black & white stretch (BWS) unit for adjusting a black component of the image signal.

In some embodiments, each of the first conversion unit and the second conversion unit may comprise an analog-to-digital converter (ADC) for converting an analog image signal into a digital image signal.

The image processing apparatus may further include a display unit for displaying an image according to the digital image signal outputted from the combining unit.

According to a second aspect of the invention, an image processing method for an image signal processing apparatus including a signal input unit to which an analog image signal is inputted comprises converting the analog image signal inputted through the signal input unit into a first digital image signal, calculating a gray scale mean for an image by analyzing a first brightness signal of the first digital image signal, and outputting a gray scale mean signal corresponding to the calculated gray scale mean and converting a portion of the analog image signal inputted through the signal input unit into a second digital image signal based on the gray scale mean signal.

The image processing method may include separating the first digital image signal into a first brightness signal and a first color difference signal and separating the second digital image signal into a second brightness signal and a second color difference signal.

The outputting of the gray scale mean may include calculating a total gray scale value by adding up gray scale values for pixels expressing the image, based on the first brightness signal, calculating the gray scale mean by dividing the total gray scale value by the number of pixels of the image and outputting the calculated gray scale mean signal.

The conversion of the portion of the analog image signal into the second digital image signal may include converting a portion of the analog image signal inputted through the signal input unit, where the portion corresponds luminances lower than the gray scale mean, into the second digital image signal, based on the gray scale mean signal.

The method may include combining the first and second digital image signals. The combination of the first digital image signal and the second digital image signal may include performing a dithering process for predetermined data in the second brightness signal based on the gray scale mean signal and combining a portion of the first brightness signal, where the portion corresponds to luminances higher than the gray scale mean, with the brightness signal of the dithered second digital image signal based on the gray scale mean signal and a predetermined look-up table.

The image processing method may further include processing the first color difference signal and a mixed brightness signal produced by a mixture of the first and second brightness signals into a displayable image signal and improving image quality of the displayable image signal.

Where performed, the improvement of the image quality of the displayable image signal may be based on the gray scale mean signal.

Where performed, the improvement of the image quality of the displayable image signal may include adjusting contrast of the displayable image signal based on the gray scale mean signal and adjusting a black component of the displayable image signal.

The image processing method may further include displaying an image according to a mixed digital image signal produced by a mixture of the first digital image signal and the second digital signal.

Example embodiments of the invention will now be described with reference to the accompany drawings, of which:

Figure 1 is a block diagram of a display device employing a conventional image processing apparatus;
Figure 2 is a block diagram of an image enhancement unit in the display device as shown in Figure 1;
Figures 3 and 4 are block diagrams of a display device to which an image processing apparatus according to an embodiment of the present invention is applied;

Figures 5(a) - 5(c) are diagrams illustrating an image processing apparatus according to an embodiment of the present invention; and

Figure 6 is a flow chart of an image processing method according to an embodiment of the present invention.

In the following detailed description, descriptions of well-known functions and constructions are omitted for clarity and conciseness.

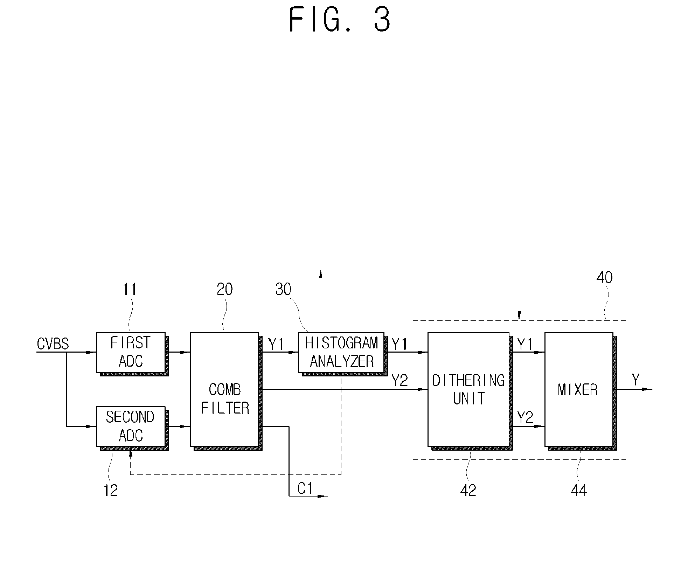

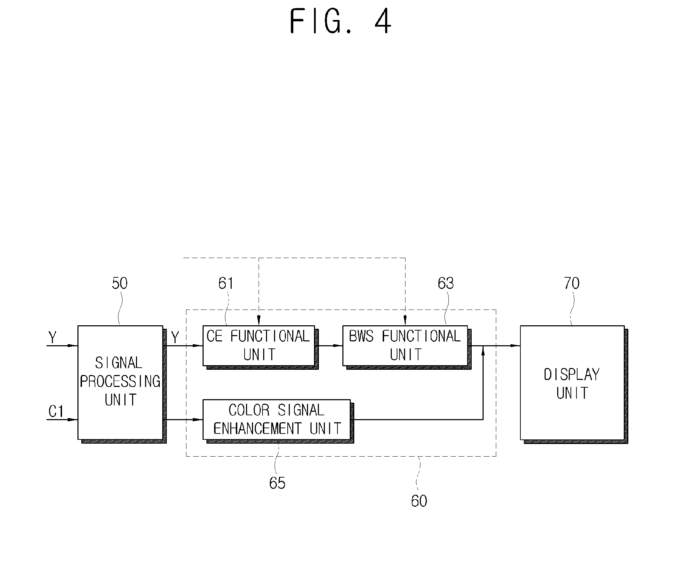

Figures 3 and 4 are block diagrams of a display device employing an image processing apparatus according to an embodiment of the present invention. Referring to Figure 3, the display device includes first and second analog-to-digital converters (ADCs) 11 and 12 for converting an analog image signal, for example, a composite video baseband signal (CVBS), provided through a signal input unit (not shown), into a digital image signal. The image processing apparatus also comprises a comb filter 20, a histogram analyzer 30 and a combining unit 40. Furthermore, the image processing apparatus comprises a signal processing unit 50, illustrated in Figure 4, for processing an image signal outputted from the combining unit 40 and the comb filter 20, an image enhancement unit 60, and a display unit 70.

The first ADC 11 is a first conversion unit for converting the inputted analog image signal into a digital image signal. The first ADC 11 converts the whole analog image signal corresponding to the whole gray scale of the inputted analog image signal into the digital image signal. For example, if the first ADC 11 has 8-bit resolution, the first ADC 11 can converts an analog image signal having 0~255 gray scale levels into a digital image signal.

The second ADC 12 is a second conversion unit for converting the inputted analog image signal into a digital image signal. The second ADC 12 converts a portion of the inputted analog image signal into a digital image signal based on a gray scale mean signal outputted from the histogram analyzer 30. Specifically, the second ADC 12 receives the analog image signal and converts a portion of the analog image signal, which corresponds to the luminance lower than the gray scale mean, into a digital image signal, based on the gray scale mean signal. For example, if the second ADC 12 has 8-bit resolution, the second ADC 12 converts a portion of the analog image signal corresponding to a range of from 0 to a gray scale mean value (Y _Mean) into a digital image signal. The conversion of a portion of the inputted analog image signal, which corresponds toluminances lower than the gray scale mean, can be performed by controlling a setting value which is used for the second ADC 12 to convert the analog image signal into the digital image signal, using the gray scale mean signal inputted to the second ADC 12.

The comb filter 20 is provided as a filter unit for receiving a first digital image signal outputted from the first ADC 11 and a second digital image signal outputted from the second ADC 12 and separating each of the received digital image signals into a brightness signal and a color difference signal. Specifically, the comb filter 20 separates the first digital image signal into which the whole analog image signal is conveyed, into a first brightness signal Y1 and a first color difference signal C1. Also, the comb filter 20 separates the second digital image signal, into which a portion of the analog image signal corresponding to luminances lower than the gray scale mean is conveyed, into a second brightness signal and a second color difference signal. Then, the comb filter 20 outputs the first brightness signal Y1 to the histogram analyzer 30 and outputs the second brightness signal Y2 to the combining unit 40. Furthermore, the comb filter 20 outputs the color difference signal C1 to the signal processing unit 50.

The histogram analyzer 30 serves as a calculation unit for calculating a gray scale mean for an image by analyzing a probability density function (PDF) for an image of the first brightness signal Y1 outputted from the comb filter 20. The histogram analyzer 30 calculates the gray scale mean according to the following Equation 1.

Equation 1

$$Y\_Mean = Mean\left\{ \frac{\Sigma(Y\_Min, Y\_Max)}{the\ number\ of\ represented\ gray\ scales} \right\}$$

Where, Y_Mean is a gray scale mean value for an image, Y_Min is the minimum gray scale value of the image, Y_Max is the maximum gray scale value of the image, and the number of represented gray scales is the number of pixels in the image. For example, the histogram analyzer 30 adds up gray scale values corresponding to gray scale representation of pixels expressing an image based on the first brightness signal Y1 to calculate a total gray value, and divides the total gray scale value by the number of represented gray scales of the image to calculate the gray scale mean. As a result, the histogram analyzer 30 outputs a gray scale mean signal corresponding to the calculated gray scale mean.

The combining unit 40 combines the digital image signals outputted from the first ADC 11 and the second ADC 12 based on the gray scale mean signal outputted from the histogram analyzer 30. The combining unit 40 includes a dithering unit 42 and a mixer 44.

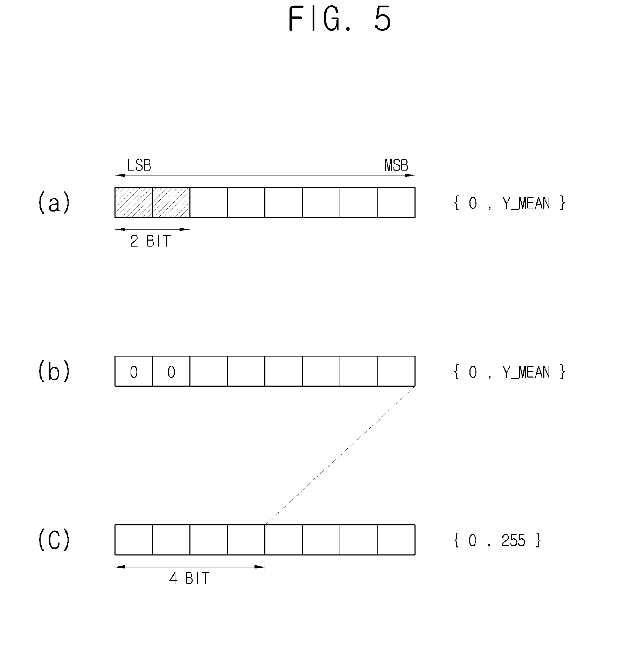

The dithering unit 42 receives the first brightness signal Y1 and the gray scale mean signal from the histogram analyzer 30, and receives the second brightness signal Y2 from the comb filter 20. The dithering unit 42 performs a dithering process on predetermined data in the second brightness signal Y2 based on the gray scale mean signal. For example, as shown in Figure 5, the dithering unit 42 performs the dithering process to remove the predetermined number, for example, 2 bits, of least significant bits corresponding to a low gray scale portion of the inputted second brightness signal Y2, of, for example, 8 bits, (see Figure 5(a)) and fill the removed data area (2 bits) with "0" (see Figure 5(b)). Such a dithering process for the least significant bits is performed because there is a high possibility that an error due to noise may occur in data corresponding to a low gray scale. Although the 2-bit dithering process is employed as an example, it is to be understood that a 1-bit or 3-bit dithering process may be employed in other embodiments. As the low gray scale portion, in which the probability of the occurrence of noise-related errors is relatively high, is dithered,noise is effectively removed. At this time, it is preferable, but not necessary, that the dithering unit 42 outputs the first brightness signal Y1 corresponding to the first digital image signal to the mixer 44 without performing a dithering process for the first brightness signal Y1. It should be appreciated that various modifications are possible within the scope of the present invention, including a configuration in which the first brightness signal Y1 outputted from the histogram analyzer 30 does not pass through the dithering unit 42 but is instead directly outputted to the mixer 44.

The mixer 44 combines the first brightness signal Y1 and the dithered second brightness signal Y2 into a brightness signal Y. The mixer 44 combines a portion of the first brightness signal Y1 corresponding to the luminance of more than the gray scale means and the second brightness signal Y2 outputted from the dithering unit 42 according to a predetermined look-up table, based on the gray scale mean signal outputted from the histogram analyzer 30. In the mixed brightness signal Y, the second brightness signal Y2 is written in the data area removed from the first brightness signal Y1.

In this particular example, the look-up table has data for the data area that has to be removed from the first brightness signal Y1, and process data to be used to process the second brightness signal Y2 to produce a mixed brightness signal Y, corresponding to various mean gray scale values.. In other words, the look-up table stores data obtained through a variety of simulations for each gray scale mean value to produce the most preferred mixed brightness signal Y by combining the first brightness signal Y1 with the second brightness signal Y2.

For example, when combining the dithered second brightness signal Y2 with the first brightness signal Y1 of the first digital image signal, as shown in Figure 5(b), if the gray scale mean value is determined to be 128 based on the gray scale mean signal, the mixer 44 removes a portion of data (4 bits of a least significant bit (LSB)) corresponding to luminances lower than the gray scale mean of the 8-bit first brightness signal Y1, based on the look-up table, and outputs the mixed brightness signal Y (see Figure 5(c)) in which the dithered 8-bit second brightness signal Y2 (see Figure 5 (b)) is written in the removed 4 bits of the LSB. Thus, the mixer 44 produces a portion of data (4 bits of the LSB), which corresponds to luminances lower than the gray scale mean among 0~255 gray scales, as the second brightness signal Y2, and outputs the brightness signal Y (see Figure 5(c)) in which data (4 bits of a most significant bit (MSB)) corresponding to luminances higher than the gray scale mean are configured with the data corresponding to the luminance higher than the gray scale mean of the first brightness signal Y1. Here, the data area (4 bits of the LSB) used to convey the second brightness signal Y2 in the mixed brightness signal Y is reduced as the gray scale mean value becomes smaller.

As stated above, in this embodiment, the image processing apparatus includes the second ADC 12 for converting the analog image signal corresponding to luminances lower than the gray scale mean, in addition to the first ADC 11. As a result, the image processing apparatus performs a separate digital conversion for the gray scale levels of an analog image signal below the gray scale mean, that is, corresponding to low gray scales, through the second ADC 12, thereby converting brightnesses at low gray scales with greater resolution than in the prior art.

Therefore, the display device displays an image according to the mixed brightness signal Y in which the second brightness signal Y2 having a low gray scale that is converted into a digital signal precisely is combined with a portion of the first brightness signal Y1 relating to gray scale levels exceeding the gray scale mean, that is, corresponding to a high gray scale, of the whole brightness signal Y1 that is generally converted into a digital signal. In this manner, a performance limitation resulting from the digital conversion process is overcome, potentially reducing, or avoiding, deterioration of image quality.

In the embodiment described above, the image processing apparatus performs a dithering process for the second brightness signal Y2 corresponding to luminances lower than the gray scale mean, thereby improving quality of an image at low gray scale levels that may otherwise be particularly prone to noise or inferior gray scale representation.

The signal processing unit 50 processes the first color difference signal C1 corresponding to the first digital image signal outputted from the comb filter 20 and the brightness signal Y outputted from the combining unit 40 to make the signals C1 and Y displayable on the display unit 70. In this embodiment, the signal processing unit 50 includes the functions of the decoder 3 (see Figure 1) and the image signal processing unit 4 (see Figure 1) in the above-described conventional display device.

The image enhancement unit 60 performs an enhancing process to improve image quality of an image signal outputted from the signal processing unit 50 based on the gray scale mean signal outputted from the histogram analyzer 30. The image enhancement unit 60 includes a contrast enhancer (CE) unit 61 for adjusting the contrast of the brightness signal Y outputted from the signal processing unit 50 based on the gray scale mean signal, a black & white stretch (BWS) unit 63 for adjusting a black component of the brightness signal Y based on the gray scale mean signal, and a color signal enhancing unit 65 for improving the image quality of the color difference signal C1 outputted from the signal processing unit 50.

As stated above, an image with improved quality according to the brightness signal Y and the color difference signal C1, which are subjected to the enhancing process performed by the image enhancement unit 60, is displayed on the display unit 70.

Although the display device including the display unit 70 illustrated in Figures 3 and 4 has been described by way of example, it should be appreciated that various modifications may be made without departing from the scope of the present invention. For example, the display device may an image processing apparatus, such as a set-top box, which can convert an analog image signal into a digital image signal, without a display unit 70.

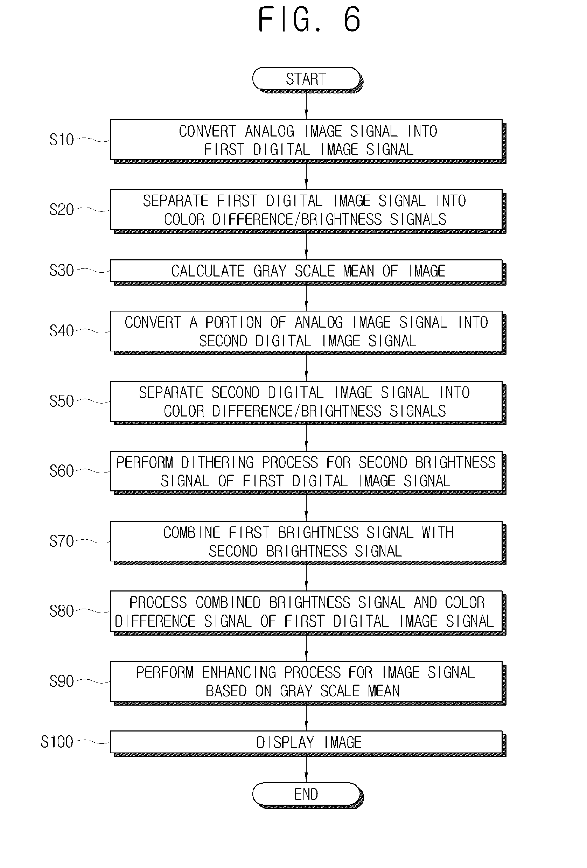

An image processing method of processing an image signal in the display device employing the image processing apparatus according to an embodiment of the present invention will be described with reference to Figure 6.

Firstly, the first ADC 11 converts an inputted analog image signal into a digital image signal at step S10. For example, the first ADC 11 outputs a first digital image signal into which the analog image signal corresponding to the entire gray scale of the inputted analog image signal is converted. The comb filter 20 separates the first digital image signal outputted from the first ADC 11 into a first brightness signal Y1 and a first color difference signal C1 at step S20. Furthermore, the comb filter 20 outputs the first brightness signal Y1 to the histogram analyzer 30, and outputs the color difference signal C1 to the signal processing unit 50.

Then, the histogram analyzer 30 analyzes a probability density function (PDF) for an image according to the first brightness signal Y1 to calculate the gray scale mean for the image at step S30. For example, the histogram analyzer 30 adds up gray scale values corresponding to gray scale levels of pixels expressing an image based on the first brightness signal Y1 to calculate a total gray scale value, and divides the total gray scale value by the number of pixels of the image to calculate the gray scale mean. Then, the histogram analyzer 30 outputs a gray scale mean signal corresponding to the calculated gray scale mean to the second ADC 12.

The second ADC 12 converts a portion of the analog image signal into a digital image signal based on the gray scale mean signal outputted from the histogram analyzer 30 at step S40. In this example, the second ADC 12 receives the analog image signal, and converts a portion of the analog image signal, which corresponds to luminances lower than the gray scale mean, into a digital image signal, based on the gray scale mean signal. The comb filter 20 separates the second digital image signal outputted from the second ADC 12 into a second brightness signal Y2 and a second color difference signal C2 at step S50 and outputs the second brightness signal Y2 to the combining unit 40.

The combining unit 40 performs a dithering process for the second brightness signal Y2 based on the gray scale mean signal outputted from the histogram analyzer 30 at step S60. At this time, the combining unit 40 does not perform a dithering process for the first brightness signal Y1. Furthermore, the combining unit 40 combines the first brightness signal Y1 and the dithered second brightness signal Y2 into a brightness signal Y at step S70. For example, the combining unit 40 combines a portion of the first brightness signal Y1 corresponding to luminances that are higher than the gray scale mean and the second brightness signal Y2 outputted from the dithering unit 42, based on the gray scale mean signal outputted from the histogram analyzer 30, according to a predetermined look up table.

Therefore, in addition to the conversion of the whole analog image signal into the digital image signal, a portion of the analog image signal corresponding to luminances lower than the gray scale mean is converted into a digital image signal, based on the gray scale mean value that is calculated by analyzing the brightness signal converted into a digital signal through the first ADC 11. As a result, the image processing method according to this embodiment performs a separate digital conversion for an analog image signal for gray scale levels below the gray scale mean, that is, corresponding to low gray scales, thereby converting the brightness signal having a low gray scale into a digital signal more precisely.

Thereafter, at step S80, the signal processing unit 50 processes the mixed brightness signal Y produced in the combining unit 40 and the color difference signal C1 separated from the first digital image signal at step S20 for display on the display unit 70. Furthermore, the image enhancement unit 60 performs an enhancing process to improve the image quality of an image signal outputted from the signal processing unit 50, based on the gray scale mean signal outputted from the histogram analyzer 30 at step S90. Such an enhancing process may include adjusting the contrast of the mixed brightness signal Y based on the gray scale mean signal, and adjusting the black component of the mixed brightness signal Y based on the gray scale mean signal. An image with improved quality according to the mixed brightness signal Y and the color difference signal C1 is then displayed on the display unit 70 at step S100.

In the image processing method described above, an image is displayed according to the mixed brightness signal Y in which the second brightness signal Y2 having a low gray scale that is converted into a digital signal through the second ADC 12 is combined with a portion of the first brightness signal Y1 that relates to gray scale levels above the gray scale mean, that is, corresponding to a high gray scale. Accordingly, the image processing method can reduce the effects of performance limitations on digital conversion on the gray scale representation of the image, to reduce or potentially avoid deterioration of image quality. As apparent from the above description, embodiments of the present invention provides an image processing apparatus and a method for providing improved gray scale representation signal by performing an adaptive process for converting an analog image signal into a digital image in consideration of gray scales of the analog image signal.

While the invention has been shown and described with reference to certain exemplary embodiments thereof, it will be understood by those skilled in the art that various changes in form and details may be made therein without departing from the scope of the invention as defined by the appended claims.

**Claims**

1. An image processing apparatus including a signal input unit to which an analog image signal is inputted, the apparatus comprising:

   a first conversion unit for converting the analog image signal inputted through the signal input unit into a first digital image signal;
   a calculating unit for calculating a gray scale mean for an image by analyzing a first brightness signal of the first digital image signal outputted from the first conversion unit and outputting a gray scale mean signal corresponding to the calculated gray scale mean; and
   at least one second conversion unit for converting a portion of the analog image signal into a second digital image signal based on the gray scale mean signal.

2. An image processing apparatus according to claim 1, comprising:

   a combining unit for combining the first digital image signal and the second digital image signal based on the gray scale mean signal.

3. An image processing apparatus according to claim 1 or 2, further comprising a filtering unit for receiving the first digital image signal, outputted from the first conversion unit, and the second digital image signal, outputted from the second conversion unit, and separating the received first digital signal into said first brightness signal and a first color difference signal and separating the second digital image signal into a second brightness signal and a second color difference signal.

4. An image processing apparatus according to claim 3, wherein the calculating unit is configured to calculate the gray scale mean for the image by analyzing the first brightness signal and the first and second color difference signals outputted from the filtering unit.

5. An image processing apparatus according to any of the preceding claims, wherein the calculating unit is arranged to calculate a total gray scale value by adding up gray scale values for pixels expressing the image, based on the first brightness signal, and to calculate the gray scale mean by dividing the total gray scale value by the number of pixels of the image.

6. An image processing apparatus according to any of the preceding claims, wherein the at least one second conversion unit is arranged to convert into the second digital image signal a portion of the analog image signal inputted through the signal input unit, the portion corresponding to luminances that are lower than the gray scale mean.

7. An image processing apparatus according to claim 3 when appended to claim 2, wherein the combining unit includes a dithering unit for performing a dithering process for reference data in the second brightness signal, and a mixer for combining a portion of the first brightness signal, the portion corresponding to luminances exceeding the gray scale mean, with the second brightness signal outputted from the dithering unit, based on the gray scale mean signal and a look-up table, to generate a mixed brightness signal.

8. An image processing apparatus according to claim 7, further comprising:

   a signal processing unit for processing the first color difference signal and the mixed brightness signal outputted from the combining unit into a displayable image signal; and
   an image enhancement unit for improving image quality of the displayable image signal outputted from the signal processing unit.

9. An image processing apparatus according to claim 8, wherein the image enhancement unit is arranged to perform a process for improving the image quality of the image signal outputted from the signal processing unit based on the gray scale mean signal outputted from the calculating unit.

10. An image processing apparatus according to claim 9, wherein the image enhancement unit comprises a contrast enhancer unit for adjusting contrast of the displayable image signal outputted from the signal processing unit based on the gray scale mean signal, and a black & white stretch unit for adjusting a black component of the displayable image signal outputted from the signal processing unit.

11. An image processing apparatus according to any of the preceding claims, wherein the first conversion unit and the second conversion unit comprise an analog-to-digital converters.

12. An image processing apparatus according to any of the preceding claims, further comprising a display unit for displaying an image.

13. An image processing method for an image signal processing apparatus including a signal input unit to which an analog image signal is inputted, the method comprising:

converting the analog image signal inputted through the signal input unit into a first digital image signal;
calculating a gray scale mean for an image by analyzing a first brightness signal of the first digital image signal, and outputting a gray scale mean signal corresponding to the calculated gray scale mean; and
converting a portion of the analog image signal inputted through the signal input unit into a second digital image signal based on the gray scale mean signal.

14. A method according to claim 13, comprising:

combining the first digital image signal and the second digital image signal based on the gray scale mean signal.

15. A method according to claim 13 or 14, further comprising:

separating the first digital image signal into the first brightness signal and a first color difference signal; and
separating the second digital image signal into a second brightness signal and a second color difference signal.

16. A method according to claim 13, 14 or 15, wherein the outputting of the gray scale mean comprises:

calculating a total gray scale value by adding up gray scale values for pixels expressing the image, based on the first brightness signal;
calculating the gray scale mean by dividing the total gray scale value by the number of pixels of the image; and
outputting the calculated gray scale mean signal.

17. A method according to any of claims 13 to 16, wherein the converting of the portion of the analog image signal into the second digital image signal comprises converting a portion of the analog image signal inputted through the signal input unit, the portion corresponding to the luminance lower than the gray scale mean, into the second digital image signal, based on the gray scale mean signal.

18. A method according to 17, wherein the combining of the first digital image signal and the second digital image signal comprises:

performing a dithering process for reference data in the second brightness signal based on the gray scale mean signal; and
combining a portion of the first brightness signal, the portion corresponding to luminances exceeding the gray scale mean, with the brightness signal of the dithered second digital image signal, based on the gray scale mean signal and a look-up table.

19. A method according to any of claims 13 to 20, further comprising:

processing the first color difference signal and a mixed brightness signal, produced by combining the first and second brightness signals, into a displayable image signal; and
improving image quality of the displayable image signal.

20. A method according to claim 19, wherein the improving of the image quality of the displayable image signal is based on the gray scale mean signal.

21. A method according to claim 20, wherein the improving of the image quality of the displayable image comprises:

adjusting contrast of the displayable image signal based on the gray scale mean signal; and
adjusting a black component of the displayable image signal.

22. A method according to any of claims 13 to 21, further comprising displaying an image according to a mixed digital image signal produced by combining the first digital image signal and the second digital signal.

# FIG. 1
## (CONVENTIONAL ART)

EP 1 788 799 A2

CVBS → | 1 ADC | → | 2 COMB FILTER | → | 3 DECODER | → | 4 IMAGE SIGNAL PROCESSING UNIT | → | 5 IMAGE ENHANCEMENT UNIT | → | 6 DISPLAY UNIT |

FIG. 2
(CONVENTIONAL ART)

```
        ┌──────────────────────────────────────────────┐
        │                                              │
        │                                              ▼
Y ──▶┌──────────────┐   ┌──────────────┐   ┌──────────────┐──▶
     │  HISTOGRAM   │──▶│ CE FUNCTIONAL │──▶│ BWS FUNCTIONAL│
     │   ANALYZER   │   │     UNIT      │   │     UNIT      │
     └──────────────┘   └──────────────┘   └──────────────┘
            7                  8                  9
```

# FIG. 3

# FIG. 4

```
                    ┌───────────────────────────────────────┐
                    │           ┌─────────┐                  │
        50          │  61       │      63 │          70      │
 Y  ┌──────────┐ Y  │ ┌──────────────┐ │ ┌──────────────┐    │  ┌──────────┐
────│  SIGNAL  │────│─│CE FUNCTIONAL │─│─│BWS FUNCTIONAL│────│──│ DISPLAY  │
    │PROCESSING│    │ │    UNIT      │   │     UNIT      │    │  │   UNIT   │
 C1 │   UNIT   │    │ └──────────────┘   └──────────────┘    │  │          │
────│          │────│─┌──────────────────┐                   │  │          │
    └──────────┘    │ │  COLOR SIGNAL    │                   │  └──────────┘
                    │ │ ENHANCEMENT UNIT │───────────────────│
                    │ └──────────────────┘                   │
                    └────────────┬──────────────────┬────────┘
                                65                  60
```

# FIG. 5

(a)

LSB                       MSB

2 BIT          { 0 , Y_MEAN }

(b)   | 0 | 0 |   { 0 , Y_MEAN }

(C)    { 0 , 255 }

4 BIT

# FIG. 6

START

S10 — CONVERT ANALOG IMAGE SIGNAL INTO FIRST DIGITAL IMAGE SIGNAL

S20 — SEPARATE FIRST DIGITAL IMAGE SIGNAL INTO COLOR DIFFERENCE/BRIGHTNESS SIGNALS

S30 — CALCULATE GRAY SCALE MEAN OF IMAGE

S40 — CONVERT A PORTION OF ANALOG IMAGE SIGNAL INTO SECOND DIGITAL IMAGE SIGNAL

S50 — SEPARATE SECOND DIGITAL IMAGE SIGNAL INTO COLOR DIFFERENCE/BRIGHTNESS SIGNALS

S60 — PERFORM DITHERING PROCESS FOR SECOND BRIGHTNESS SIGNAL OF FIRST DIGITAL IMAGE SIGNAL

S70 — COMBINE FIRST BRIGHTNESS SIGNAL WITH SECOND BRIGHTNESS SIGNAL

S80 — PROCESS COMBINED BRIGHTNESS SIGNAL AND COLOR DIFFERENCE SIGNAL OF FIRST DIGITAL IMAGE SIGNAL

S90 — PERFORM ENHANCING PROCESS FOR IMAGE SIGNAL BASED ON GRAY SCALE MEAN

S100 — DISPLAY IMAGE

END